# EUROPÄISCHE PATENTSCHRIFT

(11) **EP 2 920 795 B1**
(45) Veröffentlichungstag und Bekanntmachung des Hinweises auf die Patenterteilung: **02.11.2016**
(21) Anmeldenummer: 14703300.5
(22) Anmeldetag: 24.01.2014
(51) Int. Cl.: H01B 3/40, H02K 3/30, H02K 3/40, H01F 5/06, B82Y 30/00, C08K 5/01

(54) **IMPRÄGNIERHARZ FÜR EINEN ELEKTROISOLATIONSKÖRPER, ELEKTROISOLATIONSKÖRPER UND VERFAHREN ZUM HERSTELLEN DES ELEKTROISOLATIONSKÖRPERS**
IMPREGNATING RESIN FOR AN ELECTRICAL INSULATION BODY, ELECTRICAL INSULATION BODY AND METHOD FOR PRODUCING THE ELECTRICAL INSULATION BODY
RÉSINE D'IMPRÉGNATION POUR UN CORPS D'ISOLATION ÉLECTRIQUE, CORPS D'ISOLATION ÉLECTRIQUE ET PROCÉDÉ DE FABRICATION DU CORPS D'ISOLATION ÉLECTRIQUE

(30) Priorität: 04.02.2013 EP 13153791
(43) Veröffentlichungstag der Anmeldung: 23.09.2015
(73) Patentinhaber: Siemens Aktiengesellschaft, 80333 München (DE)
(72) Erfinder: BROCKSCHMIDT, Mario, 45131 Essen (DE); POHLMANN, Friedhelm, 45355 Essen (DE); RAINER, Frank, 46047 Oberhausen (DE)
(86) Internationale Anmeldenummer: PCT/EP2014/051358
(87) Internationale Veröffentlichungsnummer: WO 2014/118081

(56) Entgegenhaltungen:
- WO-A1-2012/013439
- DATABASE WPI Week 201213 Thomson Scientific, London, GB; AN 2012-A73085 XP002711412, & CN 102 295 878 A (UNIV SHANGHAI) 28. Dezember 2011 (2011-12-28)
- DATABASE WPI Week 200668 Thomson Scientific, London, GB; AN 2006-652066 XP002711413, & JP 2006 249276 A (TOKYO ELECTRIC POWER CO INC) 21. September 2006 (2006-09-21)

## Beschreibung

Die Erfindung betrifft ein Imprägnierharz für einen Elektroisolationskörper, den Elektroisolationskörper und ein Verfahren zum Herstellen des Elektroisolationskörpers.

Elektrische Maschinen, wie z.B. Motoren und Generatoren, weisen elektrische Leiter, eine Hauptisolation und ein Ständerblechpaket auf. Die Hauptisolation dient dem Zweck, die Leiter gegeneinander, gegen das Ständerblechpaket und gegen die Umgebung elektrisch zu isolieren. Bei Betrieb der elektrischen Maschine können sich durch elektrische Teilentladungen Funken bilden, die sog. "Treeing"-Kanäle in der Hauptisolation ausbilden können. Als Folge der "Treeing"-Kanäle kann es zu einem elektrischen Durchschlag durch die Hauptisolation kommen. Eine Barriere gegen die Teilentladungen wird durch den Einsatz von Glimmer in der Hauptisolation erreicht, welcher eine hohe Teilentladungsbeständigkeit hat. Der Glimmer wird in Form von plättchenförmigen Glimmerpartikeln mit einer herkömmlichen Partikelgröße von mehreren 100 Mikrometern bis zu mehreren Millimetern eingesetzt, wobei die Glimmerpartikel zu einem Glimmerpapier verarbeitet werden. Zur Erhöhung der Festigkeit und zur Verbesserung der Verarbeitbarkeit wird ein Elektroisolationsband verwendet, welches neben dem Glimmerpapier eine Trägerstruktur aufweist.

Zur Herstellung der Hauptisolation wird das Elektroisolationsband um den Leiter gewickelt. Darauf folgend wird das Elektroisolationsband mit einem Kunstharz imprägniert und anschließend wird das Kunstharz ausgehärtet. Zur Verbesserung der Teilentladungsbeständigkeit der Hauptisolation ist der Einsatz von nanoskaligen Partikeln bekannt, die in dem Kunstharz vor dem Imprägnieren dispergiert werden. Durch die Anwesenheit der Partikel verkürzt sich jedoch die Lebensdauer des Kunstharzes. Dies zeigt sich insbesondere in einer voranschreitenden Polymerisierung des Kunstharzes, welche zu einem Anstieg der Viskosität des Kunstharzes führt und damit die Imprägnierung des Elektroisolationsbandes erschwert.

Aufgabe der Erfindung ist es, ein Imprägnierharz für einen Elektroisolationskörper zu schaffen, wobei sowohl das Imprägnierharz als auch der Elektroisolationskörper eine lange Lebensdauer haben.

Das erfindungsgemäße Imprägnierharz für einen Elektroisolationskörper weist ein Basisharz, einen nanoskalige Partikel aufweisenden Füllstoff und einen radikalisch polymerisierenden Reaktivverdünner auf. Der Reaktivverdünner hat eine niedrigere Viskosität als das Basisharz, wodurch ein höherer Massenanteil der nanoskaligen Partikeln in dem erfindungsgemäßen Imprägnierharz realisierbar ist, als es bei einem vergleichbaren Imprägnierharz mit gleicher Viskosität ohne den Reaktivverdünner möglich ist. Durch die Anwesenheit des Reaktivverdünners verringert sich die Konzentration des Basisharzes in dem Imprägnierharz, wodurch sich die Polymerisierungsgeschwindigkeit des Basisharzes erniedrigt und sich somit vorteilhaft seine Lebensdauer verlängert.

Das Verhältnis m(Reaktivverdünner) / (m(Basisharz) + m(Reaktivverdünner)) beträgt bevorzugt von 0.3 bis 0.7, besonders bevorzugt von 0.4 bis 0.6, wobei m(Basisharz) und m(Reaktivverdünner) jeweils die Massen des Basisharzes und des Reaktivverdünners in dem Imprägnierharz sind. Mit diesem Verhältnis lässt sich vorteilhaft ein besonders hoher Massenanteil der nanoskaligen Partikeln in dem Imprägnierharz erreichen bei gleichzeitig einer hohen Festigkeit des ausgehärteten Imprägnierharzes.

Der Reaktivverdünner ist bevorzugt Styrol, Vinyltoluol, insbesondere o-Vinyltoluol, m-Vinyltoluol und/oder p-Vinyltoluol, ein Alkylacrylat und/oder Alkandioldiacrylat, insbesondere Hexandioldiacrylat, insbesondere 1,6-Hexandioldiacrylat. Diese Verbindungen haben vorteilhaft eine besonders niedrige Viskosität, so liegt beispielsweise die Viskosität von Styrol zwischen 0,7 und 0,8 mPa*s und damit ungefähr 20 % niedriger als die Viskosität von Wasser.

Es ist bevorzugt, dass das Basisharz ein Epoxidharz, ein Polyesterimid, insbesondere ein ungesättigtes Polyesterimid, ein Polyester, insbesondere ein ungesättigter Polyester, und/oder ein Polyurethan. Das Epoxidharz weist bevorzugt Bisphenol-A-diglycidylether, Bisphenol-F-diglycidylether, Phenolnovolake, aliphatische Epoxide und/oder cycloaliphatische Epoxide auf. Weiterhin ist bevorzugt, dass das Epoxidharz ein cyclisches Carbonsäureanhydrid aufweist, insbesondere Maleinsäureanhydrid, Phthalsäureanhydrid, Methylhexahydrophthalsäureanhydrid und/oder Hexahydrophthalsäureanhydrid. Es ist weiterhin bevorzugt, dass das Epoxidharz ein Amin als Härter aufweist. Bei allen vorgenannten Basisharzen handelt es sich um nicht radikalisch polymerisierende Harze, die nicht mit dem radikalisch polymerisierenden Reaktivverdünner reagieren. Dadurch und indem sich durch die Anwesenheit des Reaktivverdünners die Konzentration des Basisharzes in dem Imprägnierharz erniedrigt, erniedrigt sich die Geschwindigkeit der Polymerisierung des Basisharzes. Dadurch hat das Imprägnierharz vor dem Imprägnieren vorteilhaft eine besonders lange Lebensdauer.

Es ist bevorzugt, dass das Imprägnierharz einen Quervernetzer zum Vernetzen des Basisharzes und des Reaktivverdünners aufweist, insbesondere Bicyclo[2.2.1]hept-5-en-2,3-dicarboxylanhydrid, 1-Methylbicyclo[2.2.1]hept-5-en-2,3-dicarboxylanhydrid, 2-Methylbicyclo[2.2.1]hept-5-en-2,3-dicarboxylanhydrid, 5-Methylbicyclo[2.2.1]hept-5-en-2,3-dicarboxylanhydrid und/oder
7-Methylbicyclo[2.2.1]hept-5-en-2,3-dicarboxylanhydrid als den Quervernetzer. Beim Aushärten des Imprägnierharzes wird die Alkengruppe des Quervernetzers bei dem radikalischen Kettenwachstum des Reaktivverdünners mit in das polymere Netzwerk des Reaktivverdünners eingebaut. Gleichzeitig wird die Anhydridgruppe des Quervernetzers in das polymere Netzwerk des Basisharzes eingebaut. Durch den Quervernetzer ergibt sich vorteilhaft eine hohe Festigkeit des ausgehärteten Imprägnierharzes.

Es ist bevorzugt, dass das Imprägnierharz einen zweiten Füllstoff mit Partikeln aufweist, die einen mittleren Partikeldurchmesser von ca. 100 nm bis ca. 100 µm aufweist. Die nanoskaligen Partikel und/oder die Partikel des zweiten Füllstoffs sind bevorzugt anorganische Partikel, die insbesondere Aluminiumoxid, Aluminiumhydroxid, Siliziumdioxid, Titandioxid, Seltenerdenoxid, Alkalimetalloxid, Metallnitrid, und/oder Schichtsilikate, insbesondere exfolierte oder teilweise exfolierte Schichtsilikate, aufweisen. Die nanoskaligen Partikel können beispielsweise durch ein in-situ Verfahren oder durch ein flammenpyrolytisches Verfahren hergestellt sein. Die Schichtsilikate können sowohl natürlicher als auch synthetischer Herkunft sein. Die genannten Stoffe für die Partikel beschleunigen die Polymerisierung des Reaktivverdünners nicht, so dass das Imprägnierharz vorteilhaft eine lange Lebensdauer hat. Der mittlere Partikeldurchmesser der nanoskaligen Partikel liegt bevorzugt zwischen ca. 1 nm und ca. 100 nm. Durch eine Silanisierung der Oberflächen der Partikel durch ein Umsetzen der Partikel mit Alkylalkoxysilanen, insbesondere Methyltrimethoxysilan, Dimethyldimethoxysilan und/oder Trimethylmethoxysilan, kann die Oberfläche der Partikel organophiliert werden, so dass die Partikel vorteilhaft besser mit der Mischung aus dem Carbonsäureanhydrid und dem Oxiran mischbar sind und die Polymerisierung des Basisharzes weniger stark beschleunigen.

Es ist weiterhin bevorzugt, dass die Oberflächen derart silanisiert werden, dass die Oberflächen als Quervernetzer zum Vernetzen des Basisharzes und des Reaktivverdünners wirken. Der erfindungsgemäße Elektroisolationskörper weist ein Elektroisolationsband auf, bevorzugt ein Glimmer und/oder Aluminiumoxid aufweisendes Elektroisolationsband, das von dem Imprägnierharz durchtränkt ist.

Indem das erfindungsgemäße Imprägnierharz mit einem höherem Massenanteil der nanoskaligen Partikel als das vergleichbare Imprägnierharz ohne den Reaktivbeschleuniger mit gleicher Viskosität hergestellt werden kann, kann auch der Elektroisolationskörper mit einem höheren Massenanteil an nanoskaligen Partikeln hergestellt werden als ein vergleichbarer Elektroisolationskörper mit dem vergleichbaren Imprägnierharz. Dadurch ist die Lebensdauer des Elektroisolationskörpers länger als die Lebensdauer des vergleichbaren Elektroisolationskörpers. Durch den höheren Massenanteil an den nanoskaligen Partikeln erhöht sich zudem die Wärmeleitfähigkeit des Elektroisolationskörpers, was dessen Lebensdauer weiter erhöht.

Das Verhältnis m(Imprägnierharz) / (m(Imprägnierharz) + m(Elektroisolationsband)) beträgt bevorzugt von 0.1 bis 0.6, wobei m(Imprägnierharz) und m(Elektroisolationsband) jeweils die Massen des Imprägnierharzes und des Elektroisolationsbandes in dem Elektroisolationskörper sind. Dabei lassen sich die hohen Massenanteile des Imprägnierharzes in dem Elektroisolationskörper erreichen, wenn das Elektroisolationsband in einem "Resin-Rich-Verfahren" imprägniert wird. Dabei wird das Imprägnierharz mittels einer Backpresse in das Elektroisolationsband hinein gepresst und anschließend mit der Backpresse durch eine Zufuhr von Wärme ausgehärtet. Zusammen mit den hohen erreichbaren Massenanteilen der nanoskaligen Partikel in dem Imprägnierharz lassen sich vorteilhaft Massenanteile der nanoskaligen Partikel in dem Elektroisolationskörper von über 50 % erreichen.

Es ist bevorzugt, dass das Elektroisolationsband des Elektroisolationskörpers Chromacetylacetonat, Zn-Naphthenat und/oder eine Verbindung mit der Strukturformel R¹CO²- R²CO²-Zn²⁺ als Reaktionsbeschleuniger aufweist, wobei R¹ und R² jeweils unabhängig voneinander eine geradkettige oder verzweigte Alkylgruppe sind, insbesondere C₆alkyl, C₇alkyl, C₈alkyl, C₉alkyl oder C₁₀alkyl. Der Reaktionsbeschleuniger beschleunigt die Polymerisierung des Basisharzes und liegt bevorzugt bereits vor dem Imprägnieren in dem Elektroisolationsband vor, so dass die Polymerisierung des Basisharzes vorteilhaft erst nach dem Imprägnieren stattfindet. Die Verbindung mit der Strukturformel R¹CO²- R²CO²- Zn²⁺ ist vorteilhaft in einer höheren Reinheit und mit geringeren Qualitätsschwankungen als Zn-Naphthenat erhältlich, so dass die Aushärtung des Elektroisolationskörpers vorteilhaft einfacher als mit dem Zn-Naphthenat bewerkstelligt werden kann.

Es ist bevorzugt, dass das Elektroisolationsband einen Radikalstarter aufweist, insbesondere ein Alkylperoxid, ein Alkoylperoxid, ein Arylperoxid, insbesondere Dicumylperoxid, und/oder ein Aroylperoxid, insbesondere 2,5-Dimethyl-2,5-dibenzoylperoxyhexan und/oder Dibenzoylperoxid. Der Radikalstarter startet das Kettenwachstum des Reaktivverdünners und liegt bevorzugt bereits vor dem Imprägnieren in dem Elektroisolationsband vor, so dass die Polymerisierung des Reaktivverdünners vorteilhaft erst nach dem Imprägnieren stattfindet. Der Zerfall des Radikalstarters und damit das Kettenwachstum kann beispielsweise durch eine Zufuhr von Wärme oder durch eine Bestrahlung mit Licht, vorzugsweise mit UV-Licht, initiiert werden. Es ist bevorzugt, dass das Imprägnierharz Benzochinon als Stabilisator für die radikalische Polymerisierung aufweist.

Das erfindungsgemäße Verfahren zum Herstellen des Elektroisolationskörpers weist die Schritte auf: a) Herstellen des Imprägnierharzes mittels a1) Mischen des Füllstoffs mit dem Reaktivverdünner; a2) Mischen des Reaktivverdünners mit dem Basisharz; b) Durchtränken des Elektroisolationsbandes mit dem Imprägnierharz; c) Aushärten des Imprägnierharzes.

Indem der Füllstoff zuerst mit dem Reaktivverdünner gemischt wird, erfolgt eine zumindest teilweise Bedeckung der Oberfläche der nanoskaligen Partikel mit dem Reaktivverdünner, so dass das Basisharz von den nanoskaligen Partikeln zumindest teilweise abgeschirmt wird, so dass die nanoskaligen Partikel die Polymerisierung des Basisharzes weniger stark beschleunigen. Somit ergibt sich vorteilhaft eine lange Lebensdauer des Imprägnierharzes trotz der Anwesenheit der nanoskaligen Partikel.

Es ist denkbar, dass der Reaktivverdünner während oder nach dem Imprägnieren ganz oder teilweise aus dem Imprägnierharz entfernt wird. Ebenfalls ist denkbar, dass der Reaktivverdünner in dem Imprägnierharz verbleibt und zusammen mit dem Imprägnierharz ausgehärtet wird.

Das Verfahren zum Herstellen des Elektroisolationskörpers weist vorzugsweise den Schritt auf: a3) Einstellen der Viskosität des Imprägnierharzes durch Erhöhen der Viskosität mittels Zugabe eines Oligomers des Basisharzes oder eines Oligomers einer Komponente des Basisharzes, insbesondere ein Oligomer eines mindestens zwei Epoxidgruppen aufweisenden Epoxids, insbesondere ein Oligomer von Bisphenol-A-diglycidylether und/oder ein Oligomer von Bisphenol-F-diglycidylether. Durch das Einstellen der Viskosität können vorteilhaft Tränkfehler beim Imprägnieren unterbunden werden und ein optimaler Massenanteil an Imprägnierharz in dem Elektroisolationskörper erreicht werden.

Anhand von zwei Beispielen wird im Folgenden die Erfindung näher erläutert.

In einem ersten Beispiel wird ein Imprägnierharz hergestellt, in dem zuerst eine Mischung aus Styrol als Reaktivverdünner und eines Füllstoffs hergestellt wird, der aus Partikeln aus Titandioxid mit einem mittleren Partikeldurchmesser von 20 nm besteht. Anschließend wird die Mischung mit einem Basisharz bestehend aus einer stöchiometrischen Mischung aus Bisphenol-A-diglycidylether und Phthalsäureanhydrid gemischt. Dabei wird das Verhältnis m(Reaktivverdünner) / (m(Basisharz) + m(Reaktivverdünner)) = 0.4 gewählt und das Verhältnis m(Füllstoff) / (m(Füllstoff) + m(Reaktivverdünner) + m(Basisharz)) = 0.05 bis 0.6 gewählt, wobei m(Basisharz), m(Reaktivverdünner) und m(Füllstoff) jeweils die Massen des Basisharzes, des Reaktivverdünners und des Füllstoffs in dem Imprägnierharz sind.

Ein elektrischer Leiter wird mit einem Glimmer aufweisenden Elektroisolationsband umwickelt. Das Elektroisolationsband weist Zn-Naphthenat als Reaktionsbeschleuniger für das Basisharz und Dibenzoylperoxid als Radikalstarter für den Reaktivverdünner auf. Das Elektroisolationsband wird von dem Imprägnierharz derart in einem "Resin-Rich-Verfahren" durchtränkt, dass das Verhältnis m(Imprägnierharz) / (m(Imprägnierharz) + m(Elektroisolationsband)) = 0.5 beträgt, wobei m(Imprägnierharz) und m(Elektroisolationsband) jeweils die Massen des Imprägnierharzes und des Elektroisolationsbandes sind. Durch eine Zufuhr von Wärme wird das Imprägnierharz ausgehärtet und ein Elektroisolationskörper fertig gestellt.

In einem zweiten Beispiel wird ein Imprägnierharz hergestellt, in dem zuerst eine Mischung aus Vinyltoluol als Reaktivverdünner und eines Füllstoffs hergestellt wird, der aus Partikeln aus Aluminiumoxid mit einem mittleren Partikeldurchmesser von 15 nm besteht. Anschließend wird die Mischung mit einem Basisharz bestehend aus einer stöchiometrischen Mischung aus Bisphenol-F-diglycidylether und Maleinsäureanhydrid gemischt. Dabei wird das Verhältnis m(Reaktivverdünner) / (m(Basisharz) + m(Reaktivverdünner)) = 0.6 gewählt und das Verhältnis m(Füllstoff) / (m(Füllstoff) + m(Reaktivverdünner) + m(Basisharz)) = 0.5 gewählt, wobei m(Basisharz), m(Reaktivverdünner) und m(Füllstoff) jeweils die Massen des Basisharzes, des Reaktivverdünners und des Füllstoffs in dem Imprägnierharz sind. Das Imprägnierharz weist weiterhin 1 Massenprozent Methylbicyclo[2.2.1]hept-5-en-2,3-dicarboxylanhydrid als Quervernetzer auf.

Ein elektrischer Leiter wird mit einem Glimmer aufweisenden Elektroisolationsband umwickelt. Das Elektroisolationsband weist Zn-neodecanoat als Reaktionsbeschleuniger für das Basisharz und Dicumylperoxid als Radikalstarter für den Reaktivverdünner auf. Das Elektroisolationsband wird von dem Imprägnierharz derart in einem "Resin-Rich-Verfahren" durchtränkt, dass das Verhältnis m(Imprägnierharz) / (m(Imprägnierharz) + m(Elektroisolationsband)) = 0.5 beträgt, wobei m(Imprägnierharz) und m(Elektroisolationsband) jeweils die Massen des Imprägnierharzes und des Elektroisolationsbandes sind. Durch eine Zufuhr von Wärme wird das Imprägnierharz ausgehärtet und ein Elektroisolationskörper fertig gestellt.

Obwohl die Erfindung im Detail durch die bevorzugten Ausführungsbeispiele näher illustriert und beschrieben wurde, so ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Imprägnierharz für einen Elektroisolationskörper,
das ein Basisharz, einen nanoskalige Partikel aufweisenden Füllstoff und einen radikalisch polymerisierenden Reaktivverdünner aufweist, wobei das Imprägnierharz einen Quervernetzer zum Vernetzen des Basisharzes und des Reaktivverdünners aufweist,
wobei der Reaktivverdünner Styrol, Vinyltoluol, insbesondere o-Vinyltoluol, m-Vinyltoluol und/oder p-Vinyltoluol, ein Alkylacrylat und/oder Alkandioldiacrylat, insbesondere Hexandioldiacrylat,
insbesondere 1,6-Hexandioldiacrylat, ist,
wobei das Basisharz ein Epoxidharz, ein Polyesterimid, insbesondere ein ungesättigtes Polyesterimid, ein Polyester,
insbesondere ein ungesättigter Polyester, und/oder ein Polyurethan ist,
wobei der Quervernetzer Bicyclo[2.2.1]hept-5-en-2,3-dicarboxylanhydrid,
1-Methylbicyclo[2.2.1]hept-5-en-2,3-dicarboxylanhydrid,
2-Methylbicyclo[2.2.1]hept-5-en-2,3-dicarboxylanhydrid,
5-Methylbicyclo[2.2.1]hept-5-en-2,3-dicarboxylanhydrid
und/oder
7-Methylbicyclo[2.2.1]hept-5-en-2,3-dicarboxylanhydrid ist.

2. Imprägnierharz gemäß Anspruch 1,
wobei das Verhältnis m(Reaktivverdünner) / (m(Basisharz) + m(Reaktivverdünner)) von 0.3 bis 0.7 beträgt,
besonders bevorzugt von 0.4 bis 0.6,
wobei m(Basisharz) und m(Reaktivverdünner) jeweils die Massen des Basisharzes und des Reaktivverdünners in dem Imprägnierharz sind.

3. Imprägnierharz gemäß einem der Ansprüche 1 bis 2,
wobei die nanoskaligen Partikel anorganische Partikel sind, die insbesondere Aluminiumoxid, Aluminiumhydroxid, Siliziumdioxid, Titandioxid, Seltenerdenoxid, Alkalimetalloxid, Metallnitrid, und/oder Schichtsilikate,
insbesondere exfolierte oder teilweise exfolierte Schichtsilikate, aufweisen.

4. Elektroisolationskörper mit einem
Elektroisolationsband,
bevorzugt einem Glimmer und/oder Aluminiumoxid aufweisenden Elektroisolationsband, das von dem Imprägnierharz gemäß einem der Ansprüche 1 bis 3 durchtränkt ist.

5. Elektroisolationskörper gemäß Anspruch 4,
wobei das Verhältnis m(Imprägnierharz) / (m(Imprägnierharz) + m(Elektroisolationsband)) von 0.1 bis 0.6 beträgt,
wobei m(Imprägnierharz) und m(Elektroisolationsband) jeweils die Massen des Imprägnierharzes und des Elektroisolationsbandes in dem Elektroisolationskörper sind.

## Claims

1. Impregnating resin for an electrical insulation body, which comprises a base resin, a filler having nanosize particles and a free-radically polymerizing reactive diluent, wherein the impregnating resin comprises a crosslinker for crosslinking the base resin and the reactive diluent,
where the reactive diluent is styrene, vinyltoluene, in particular o-vinyltoluene, m-vinyltoluene and/or p-vinyltoluene, an alkyl acrylate and/or alkanediol diacrylate, in particular hexanediol diacrylate, in particular 1,6-hexanediol diacrylate,
the base resin is an epoxy resin, a polyesterimide, in particular an unsaturated polyesterimide, a polyester, in particular an unsaturated polyester, and/or a polyurethane and the crosslinker is bicycle[2.2.1]hept-5-ene-2,3-dicarboxylic anhydride,
1-methylbicyclo[2.2.1]hept-5-ene-2,3-dicarboxylic anhydride,
2-methylbicyclo[2.2.1]hept-5-ene-2,3-dicarboxylic anhydride,
5-methylbicyclo[2.2.1]hept-5-ene-2,3-dicarboxylic anhydride
and/or
7-methylbicyclo[2.2.1]hept-5-ene-2,3-dicarboxylic anhydride.

2. Impregnating resin according to Claim 1, wherein the ratio m(reactive diluent)/(m(base resin) + m(reactive diluent)) is from 0.3 to 0.7, particularly preferably from 0.4 to 0.6, where m(base resin) and m(reactive diluent) are the masses of the base resin and of the reactive diluent, respectively, in the impregnating resin.

3. Impregnating resin according to either Claim 1 or 2, wherein the nanosize particles are inorganic particles comprising, in particular, aluminum oxide, aluminum hydroxide, silicon dioxide, titanium dioxide, rare earth oxide, alkali metal oxide, metal nitride and/or sheet silicates, in particular exfoliated or partially exfoliated sheet silicates.

4. Electrical insulation body having an electrical insulation tape, preferably an electrical insulation tape comprising mica and/or aluminum oxide, which has been impregnated by the impregnating resin according to any of Claims 1 to 3.

5. Electrical insulation body according to Claim 4, wherein the ratio m(impregnating resin)/(m(impregnating resin) + m(electrical insulation tape)) is from 0.1 to 0.6, where m(impregnating resin) and m(electrical insulation tape) are the masses of the impregnating resin and of the electrical insulation tape, respectively, in the electrical insulation body.

## Revendications

1. Résine d'imprégnation pour un corps d'isolation électrique qui a une résine de base, une charge ayant des particules à l'échelle nanométrique et un diluant réactif à polymérisation radicalaire, la résine d'imprégnation ayant un réticulent transversal pour la réticulation de la résine de base et du diluant réactif,
dans lequel le diluant réactif est le styrène, le vinyltoluène, notamment le o-vinyltoluène, le m-vinyltoluène et/ou le p-vinyltoluène, un acrylate d'alcoyle, et/ou un diacrylate d'alcanediol, notamment le diacrylate d'hexanediol, notamment le diacrylate de 1,6 hexanediol,
la résine de base est une résine époxyde, un polyesterimide, notamment un polyesterimide insaturé, un polyester,
notamment un polyester insaturé et/ou un polyuréthane,
le réticulent transversal est l'anhydride bicyclo [2.2.1] hept-5-èn-2,3-dicarboxylique,
l'anhydride 1-méthylbicyclo [2.2.1] hept-5-èn-2,3-dicarboxylique,
l'anhydride 2-méthylbicyclo [2.2.1] hept-5-èn-2,3-dicarboxylique,
l'anhydride 5-méthylbicyclo [2.2.1] hept-5-èn-2,3-dicarboxylique,
et/ou
l'anhydride 7-méthylbicyclo [2.2.1] hept-5-èn-2,3-dicarboxydlandrid.

2. Résine d'imprégnation suivant la revendication 1,
dans laquelle le rapport m ( diluant réactif ) / ( m( ( résine de base ) + m( diluant réactif ) ) va de 0,3 à 0,7,
notamment de préférence, de 0,4 à 0,6,
m ( résine de base ) et m( diluant réactif ) étant respectivement la masse de la résine de base et du diluant réactif dans la résine d'imprégnation.

3. Résine d'imprégnation suivant l'une des revendication 1 à 2,
dans laquelle les particules à l'échelle nanométrique sont des particules minérales qui ont, notamment, de l'oxyde d'aluminium, de l'hydroxyde d'aluminium, du dioxyde de silicium, du dioxyde de titane, de l'oxyde des terres rares, de l'oxyde de métal alcalin, du nitrure de métal et/ou des silicates en feuillets,
notamment des silicates en feuillets exfoliés ou exfoliés partiellement.

4. Corps d'isolation électrique comprenant
un ruban d'isolation électrique,
de préférence un ruban d'isolation électrique ayant du mica et/ou de l'oxyde d'aluminium,
qui est imprégné d'une résine d'imprégnation suivant l'une des revendications 1 à 3.

5. Corps d'isolation électrique suivant la revendication 4,
dans lequel le rapport m( résine d'imprégnation ) / ( m ( résine d'imprégnation ) + m ( ruban d'isolation électrique ) va de 0,1 à 0,6,
dans lequel ( m( ( résine d'imprégnation ) et m ( ruban d'isolation électrique ) sont respectivement les masses de la résine d'imprégnation et du ruban d'isolation électrique dans le corps d'isolation électrique.
